**Europäisches Patentamt**

(19) **European Patent Office**

**Office européen des brevets**

(11) Veröffentlichungsnummer: **0 096 800**

**B1**

(12) # EUROPÄISCHE PATENTSCHRIFT

(45) Veröffentlichungstag der Patentschrift:
16.03.88

(21) Anmeldenummer: **83105398.8**

(22) Anmeldetag: **31.05.83**

(51) Int. Cl.⁴: **C 10 J 3/00,** C 10 J 3/54, **C 01 B 3/26**

(54) **Verfahren zum Umsetzen von kohlenstoffhaltigem Rohstoff zu einem brennbaren Produktgas.**

(30) Priorität: **16.06.82 DE 3222653**

(43) Veröffentlichungstag der Anmeldung:
**28.12.83 Patentblatt 83/52**

(45) Bekanntmachung des Hinweises auf die Patenterteilung:
**16.03.88 Patentblatt 88/11**

(84) Benannte Vertragsstaaten:
**BE DE FR GB**

(56) Entgegenhaltungen:
**EP-A-0 008 469**
**DE-A-2 908 748**
**FR-A-1 003 980**
**US-A-2 694 624**

**Die Akte enthält technische Angaben, die nach dem Eingang der Anmeldung eingereicht wurden und die nicht in dieser Patentschrift enthalten sind.**

(73) Patentinhaber: **Siemens Aktiengesellschaft Berlin und München, Wittelsbacherplatz 2, D-8000 München 2 (DE)**

(72) Erfinder: **Reinhardt, Dieter, Dr., Am Europakanal 40, D-8520 Erlangen (DE)**

LIBER, STOCKHOLM 1988

EP 0 096 800 B1

## Beschreibung

Die Erfindung betrifft ein Verfahren zum Umsetzen von kohlenstoffhaltigem Rohstoff, insbesondere von Kohle, Holz oder Erdöl, zu einem brennbaren Produktgas durch eine Vergasungsreaktion mit Wasserdampf in Gegenwart eines Katalysators, der im für die Vergasungsreaktion bestimmten Wasserdampf unter Bildung einer gasförmigen homogenen Lösung gelöst ist.

Ein solches Verfahren ist aus der deutschen Offenlegungsschrift 28 17 835 bekannt. Nach diesem bekannten Verfahren wird Wasserdampf, in dem der Katalysator zur Verbesserung seiner Wirksamkeit gasförmig homogen gelöst ist, in einen Reaktionsbehälter geleitet, der gemahlene Kohle oder gemahlenen Koks enthält. Der Reaktionsdruck im Reaktionsbehälter liegt etwa im Bereich von 60 bar bis 10 bar, während die Reaktionstemperatur etwa 800° C bis 850° C beträgt. Als Katalysator werden Alkalichloride und Alkalicarbonate eingesetzt.

Im Reaktionsbehälter erfolgt eine Vergasung von Kohlenstoff zu Kohlenmonoxid und Wasserstoff nach der Bruttoreaktionsgleichung $C + H_2O = CO + H_2$, eine Konvertierung von Kohlenmonoxid zu Kohlendioxid und Wasserstoff nach der Bruttoreaktionsgleichung $CO + H_2O = CO_2 + H_2$ und schließlich eine Methanisierung von Kohlenmonoxid zu Methan und Wasser nach der Bruttoreaktionsgleichung $CO + 3 H_2 = CH_4 + H_2O$. Dieser Reaktionsablauf ist insgesamt endotherm. Der Katalysator beschleunigt hierbei nicht nur die Vergasung, sondern auch die Einstellung des Konvertierungs- und des Methanisierungsgleichgewichtes.

Den Reaktionsbehälter verlassen die Produktgase Wasserstoff, Kohlenmonoxid, Kohlendioxid und Methan sowie das nicht umgesetzte Wasser. Dieses Gasgemisch kann nach Auskondensation des nicht umgesetzten Wassers zu Synthesegas, Wasserstoffgas oder Erdgasersatzgas weiterverarbeitet werden.

Zur Erzeugung des Wasserdampfes mit gasförmig homogen gelöstem Katalysator wird aus einer verdünnten wässrigen Lösung des Katalysators Dampf mit einer Temperatur von etwa 500° C bis 800° C und einem Vordruck von etwa 300 bar bis 500 bar hergestellt und in den Reaktionsapparat hinein auf den Reaktionsdruck von 60 bar bis 140 bar entspannt.

Wird der katalysatorhaltige Wasserdampf mit dem verhältnismäßig hohen Vordruck aus der wässrigen Lösung des Katalysators in einem Dampferzeuger hergestellt, so besteht die Gefahr einer erheblichen Korrosionseinwirkung des Katalysators auf dem Werkstoff des Dampferzeugers. Ferner kann nicht ausgeschlossen werden, daß Rohrleitungen des Dampferzeugers verstopfen, weil sich dampfunlösliche Verunreinigungen des Katalysators nach Art von Kesselstein an den Rohrwänden abscheiden.

Durch die europäische Patentanmeldung 0 008 469 A 1 ist ein Verfahren zum Vergasen fester feinkörniger Brennstoffe bekannt geworden, bei dem die Brennstoffe in zwei miteinander verbundenen zirkulierenden Wirbelschichten unter Verwendung von Wasserdampf, Sauerstoff oder Kohlendioxid vergast werden. Dieses Verfahren wird dergestalt geführt, daß der Brennstoff in der ersten zirkulierenden Wirbelschicht mit Vergasungsmittel und Produktgas der zweiten Vergasungsstufe teilweise vergast und der in der ersten Vergasungsstufe bzw. in der ersten zirkulierenden Wirbelschicht anfallende Feststoffrückstand in die zweite zirkulierende Wirbelschicht überführt wird und dort mit einem sauerstoffhaltigen Vergasungsmittel vollständig vergast wird. Bei diesem bekannten Verfahren wird bewußt vermieden, Feststoffe aus der ersten Vergasungsstufe in die zweite Vergasungsstufe zu überführen. Ein großer Teil des Produktgases der zweiten Vergasungsstufe wird dort abgezogen und direkt dem Verbraucher zugeleitet. Nur etwa die Hälfte des Produktgases der zweiten Vergasungsstufe wird als Wirbelmedium der ersten Vergasungsstufe zugeführt. Bei diesem Verfahren, das mit zwei zirkulierenden Wirbelschichten arbeitet, findet die Vergasung somit in zwei Teilschritten statt, wobei jedem Vergasungsschritt eine eigene zirkulierende Wirbelschicht zugeordnet ist. Hierdurch sind ein gewisser baulicher Mindestaufwand, ein verhältnismäßig großer Platzbedarf und als Folge auch gewisse schwer zu unterschreitende Wärmeverluste vorgegeben. Auch der kostenmäßig nicht vernachlässigbare Verbrauch an Katalysatorsubstanzen, vorzugsweise an $K_2CO_3$ ist bei diesem Verfahren verbesserungsbedürftig.

Der Erfindung liegt die Aufgabe zugrunde, das eingangs genannte Verfahren zu verbessern und die Erzeugung von katalysatorhaltigem Dampf mit hohem Vordruck zu vermeiden. Außerdem sollte der Verbrauch an Katalysator soweit wie möglich vermindert werden.

Zur Lösung dieser Aufgabe ist ein Verfahren der eingangs erwähnten Art erfindungsgemäß dadurch gekennzeichnet, daß zur Herstellung der gasförmigen homogenen Lösung des Katalysators in Wasserdampf die aschehaltigen Vergasungsrückstände abgetrennt, unmittelbar in eine nachgeschaltete Extraktionszone eingeführt, in dieser durch Produktgas und/oder Sauerstoffgas aufgeheizt, mit dem für die Vergasungsreaktion erforderlichen Wasserdampf unter Ausbildung einer Wirbelschicht kontaktiert und die so erhaltene gasförmige homogene Lösung unmittelbar in die Vergasungszone eingeführt wird.

Die Löslichkeit des Katalysators im Wasserdampf ist dabei erheblich höher als der Partialdampfdruck des Katalysators ohne Gegenwart von $H_2O$. Auf diese Weise entfallen die Notwendigkeit zur Erzeugung des für die Vergasungsreaktion bestimmten, mit Katalysator beladenen Wasserdampfes bei einem wesentlich über dem Reaktionsdruck liegenden Vordruck, die zu diesem Zweck erforderliche Auslegung des Dampferzeugers sowie von zugehörigen Pumpen und Rohrleitungen auf diesen wesentlich höheren Vordruck und auf einen verstärkten Korrosionsangriff. Auch entfallen die anschließende Entspannung des Wasserdampfes, die damit verbundene Abkühlung im Reaktionsbehälter aufgrund des Joule-Thomson-Effekts und die Ausfällung von Katalysator in den Rohrleitungen des Dampferzeugers. Da sich der Katalysator in den aschehaltigen Vergasungsrückständen ansammelt, wird auch auf besonders einfache Weise für die Rezyklierung des Katalysators gesorgt, was besonders kostengünstig ist, da wirksame Katalysatoren einen erheblichen Kostenfaktor der katalytischen Kohlevergasung darstellen. Auch brauchen keine besonders hohen Reinheitsanforderungen an den Katalysator gestellt zu werden. Ferner entfällt eine naßchemische Wiederaufbereitung des Katalysators.

Es ist günstig, wenn die abgetrennten aschehaltigen Vergasungsrückstände mit vorerhitztem Sauerstoffgas weiter aufgeheizt werden. Dadurch kann die Wärmebilanz positiv beeinflußt werden.

Das Verfahren wird in günstiger Weise noch weiter vereinfacht, wenn die Vergasungsreaktion, das Abtrennen der aschehaltigen Vergasungsrückstände und das Extrahieren des Katalysators aus den aschehaltigen Vergasungsrückständen in demselben Druckbehälter durchgeführt werden.

Ferner ist es vorteilhaft, wenn den aschehaltigen Vergasungsrückständen nach dem Abtrennen ein Zusatzstoff zugesetzt wird, mit dem der Katalysator reaktiviert wird.

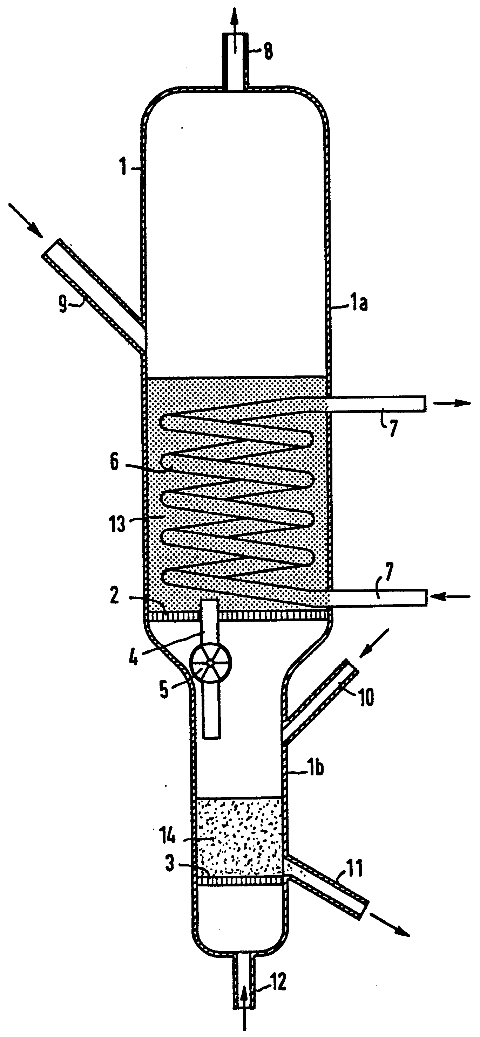

Die Erfindung und ihre Vorteile seien im folgenden anhand der Zeichnung an einem als Beispiel dienenden Reaktionsbehälters näher erläutert:

In der Zeichnung ist schematisch ein Reaktionsbehälter 1 für ein Verfahren gemäß der Erfindung dargestellt. Dieser Reaktionsbehälter 1 ist hohlzylinderförmig und mit vertikaler Längsachse aufgestellt. Er ist an beiden Stirnseiten gasdicht verschlossen und verjüngt sich im unteren Drittel unter Ausbildung eines längeren oberen Teiles 1a mit größerem und eines unteren Teiles 1b mit kleinerem Durchmesser. Am unteren Ende des oberen Teiles 1a ist ein in einem Querschnitt des oberen Teiles 1a befindlicher oberer Siebboden 2 und nahe dem unteren Ende des unteren Teiles 1b ein in einem Querschnitt dieses unteren Teiles 1b befindlicher unterer Siebboden 3 angeordnet.

Durch den oberen Siebboden 2 ist ein an beiden Enden offenes Austragsrohr 4 mit Zellenradschleuse 5 geführt, das durch den oberen Siebboden 2 hindurch die Verbindung zwischen den Teilen 1a und 1b des Reaktionsbehälters 1 herstellt. Ferner ist im oberen Teil 1a des Reaktionsbehälters 1 zwischen dem oberen Siebboden 2 und dem oberen Ende des Reaktionsbehälterteiles 1a ein aus einer Rohrschlange bestehender Wärmetauscher 6 innerhalb des Reaktionsbehälters 1 angeordnet, dessen zwei Anschlußrohre 7 sich außerhalb des Reaktionsbehälters 1 befinden und der z. B. von heißem Helium durchströmt wird.

Am oberen Ende des oberen Teiles 1a des Reaktionsbehälters 1 befindet sich an der Stirnseite des Reaktionsbehälters 1 ein Gasaustrittsstutzen 8 für rohes Produktgas. Etwa in der Mitte des oberen Teiles 1a des Reaktionsbehälters 1 ist an dessen Mantel auf der Außenseite ein Eintragstutzen 9 für kohlenstoffhaltigen Rohstoff angebracht. Zwischen diesem Eintragstutzen 9 und dem oberen Siebboden 2 befindet sich die Rohrschlange des Wärmetauschers 6.

Am oberen Ende des Teiles 1b des Reaktionsbehälters 1 mit dem kleineren Durchmesser befindet sich auf der Außenseite des Mantels des Reaktionsbehälters 1 in der Nähe der Verjüngungsstelle ein Eintragsstutzen 10, während zwischen diesem Eintragstutzen 10 und dem unteren Siebboden 3 im unteren Teil 1b des Reaktionsbehälters 1 außen an dessen Manteil ein Ascheaustragsstutzen 11 angeordnet ist, der unmittelbar am unteren Siebboden 3 in den unteren Teil 1b des Reaktionsbehälters 1 mündet.

Am unteren Ende des Reaktionsbehälters 1 und damit zugleich am gasdicht verschlossenen Ende des unteren Teiles 1b des Reaktionsbehälters 1 ist schließlich noch außen ein Gaseintrittsstutzen 12 für Wasserdampf angebracht.

In diesem Reaktionsbehälter wird eine kontinuierliche Vergasungsreaktion auf folgende Weise aufrechterhalten:

Gemahlene Steinkohle wird durch den Eintragstutzen 9 kontinuierlich zugeführt. Durch das Einblasen von $O_2$-haltigem Wasserdampf durch den Gaseintrittsstutzen 12 wird die Steinkohle oberhalb des oberen Siebbodens 2 zu einer Wirbelschicht 13 fluidisiert, in der durch Zufuhr von Wärmeenergie über den Wärmetauscher 6 eine Temperatur von etwa 700° C eingestellt wird. In dieser Wirbelschicht 13 als makroskopischem Reaktionsort bzw. Vergasungszone entsteht aus der eingesetzten Kohle durch die Vergasungsreaktion einesteils das Produktgas, das durch den Austrittsstutzen 8 aus dem Reaktionsbehälter 1 strömt und weiteren Aufarbeitungsschritten unterzogen wird, andererseits entsteht ein asche- und katalysatorreicher Vergasungsrückstand mit einem Restkohlenstoffgehalt von etwa 5 bis 15 %. Der Vergasungsrückstand wird durch das Austragsrohr 4 unter Einstellung eines auf die Abreaktion des Kohlenstoffes in der Wirbelschicht 13 eingestellten Massenstromes über die Zellenradschleuse 5 kontinuierlich in den unteren Teil des Reaktionsbehälters 1b abgezogen. Der durch den Gasaustrittstutzen 12 zuströmende $O_2$-haltige Wasserdampf fluidisiert diese Vergasungsrückstände ebenfalls zu einem Wirbelbett 14. In diesem Wirbelbett 14 als von dem Reaktionsort bzw. der Vergasungszone räumlich getrennten Extraktionsort bzw. Extraktionszone für den Katalysator erfolgt zwischen den kohlenstoffhaltigen Vergasungsrückständen und dem $O_2$ eine - durch den anwesenden Katalysator ebenfalls katalysierte - exotherme chemische Reaktion, die durch die Dosierung des durch den Gaseintrittsstutzen 12 zugeführten $O_2$ auf eine Temperatur von etwa 900°C eingestellt wird. Günstigerweise kann der Verbrauch an Sauerstoffgas verringert werden, wenn das durch den Gasaustrittsstutzen 12 zuströmende Sauerstoffgas vorerhitzt wird. An Kohlenstoff und Katalysator weitgehend verarmte Asche wird aus der Wirbelschicht 14 über den Ascheaustragstutzen 11 entfernt, während der durch den Gasaustrittsstutzen 12 zuströmende Wasserdampf den Katalysator aus den Vergasungsrückständen extrahiert und im Wasserdampf gasförmig homogen gelöst in die Wirbelschicht 13 transportiert, wo die katalytische Vergasungsreaktion der Steinkohle mit dem Wasserdampf abläuft. Auf diese Weise wird der Katalysator kontinuierlich im Reaktionsbehälter 1 rezykliert.

Zur Erhöhung der Wärmezufuhr zum unteren Wirbelbett 14 kann ein Teil des heißen Produktgases aus dem Austrittsstutzen 8 durch den Gaseintrittsstutzen 12 in den Reaktionsbehälter 1 rückgeführt werden und dort mit dem $O_2$-haltigen Wasserdampf reagieren. Sowohl die fühlbare Wärme als auch die Verbrennungswärme des Produktgases tragen dann zur Aufrechterhaltung der Temperatur der Wirbelschicht 14 bei. Zur Aufrechterhaltung der Temperatur der Wirbelschicht 14 kann den aschehaltigen Vergasungsrückständen auch durch den Eintragstutzen 10 kohlestoffhaltiger Rohstoff zugesetzt werden, der mit dem $O_2$-haltigen Wasserdampf reagiert.

Die im Dampfstrom innerhalb des Wirbelbettes 14 gasförmig homogen gelöste Menge Katalysator kann in vorteilhafter Weise erhöht werden, wenn durch den Gasaustrittsstutzen 12 nicht kontinuierlich eine Wasserdampf und $O_2$ enthaltende Gasmischung in den Reaktionsbehälter 1 eingeblasen wird, sondern wenn durch diesen Gaseintrittsstutzen 12 abwechselnd Wasserdampf, der kein $O_2$ enthält, und $O_2$-haltiges Gas, das keinen Wasserdampf enthält, in den Reaktionsbehälter 1 gelangen. Dadurch werden die aschehaltigen Vergasungsrückstände in der Wirbelschicht 14 abwechselnd mit dem für die Vergasungsreaktion bestimmten Wasserdampf und dem $O_2$ in Kontakt gebracht. Auf diese Weise kann der Wasserdampf in der Wirbelschicht 14 mit erhöhtem Partialdruck angeboten werden, so daß sich auch die Löslichkeit des Katalysators in der Wirbelschicht 14 im Wasserdampf erhöht.

Besonders gut geeignet für ein katalytisches Vergasungsverfahren gemäß der Erfindung sind als Katalysator Carbonate, Hydroxide, Oxide und Halogenide der Alkalien und/oder Oxide, Hydroxide und Halogenide von Erdalkalien, Eisen, Nickel und Kobalt.

Katalysatorverluste können durch Zufuhr von Katalysator durch den Eintragstutzen 10 ausgeglichen werden. Von Vorteil ist es, wenn durch den Eintragstutzen 10 den aschehaltigen Vergasungsrückständen in der Wirbelschicht 14 noch kontinuierlich oder chargenweise ein Zusatzstoff zugesetzt wird, mit dem der Katalysator in der aschereichen Wirbelschicht 14 reaktiviert wird. Eine solche Substanz kann beispielsweise Calciumcarbonat oder Dolomit $CaCO_3 \cdot MgCO_3$ sein, die jenen Teil der Katalysatorkationen, die durch Umsetzen mit den sauren Bestandteilen der Asche gebunden und inaktiviert wurden, wieder freisetzt.

Der Wärmetauscher 6 im Reaktionsbehälter 1 kann auch durch einen in der Abbildung nicht dargestellten Gaseintrittsstutzen für $O_2$-haltiges Gas am Mantel des Reaktionsbehälters 1 oberhalb des oberen Siebbodens 2 ersetzt werden. Durch diesen nicht dargestellten Gaseintrittsstutzen in die Wirbelschicht 13 eingeblasener $O_2$ liefert aufgrund einer exothermen chemischen Reaktion mit in der Wirbelschicht 13 enthaltenem Kohlenstoff die für die katalytische Vergasungsreaktion in der Wirbelschicht 13 erforderliche Reaktionswärme.

Es können zusätzlich in der Abbildung nicht dargestellte Zyklonabscheider vorgesehen sein, die in günstiger Weise für die Rückführung des aus den beiden Wirbelschichten 13 und 14 ausgetragenen Feingutes in das betreffende Wirbelbett sorgen. Der eine Zyklonabscheider befindet sich innerhalb des Reaktionsbehälters 1 zwischen dem oberen Siebboden 2 und etwa dem oberen Ende des Teiles 1b des Reaktionsbehälters 1 und ist dem Wirbelbett 14 an diesem Teil 1b zugehörig. Der andere Zyklonabscheider befindet sich zweckmäßigerweise außerhalb des Reaktionsbehälters 1 und ist mit seinem Gaseintrittsstutzen am Gasaustrittsstutzen 8 des Reaktionsbehälters 1 angeschlossen. Sein Austragsbecken für das Feingut ist am Eingangstutzen 9 des Reaktionsbehälters 1 angeschlossen, so daß das abgeschiedene Feingut wieder in die Wirbelschicht 13 im oberen Teil 1a des Reaktionsbehälters 1 mit dem größeren Durchmesser gelant.

**Ausführungsbeispiel 1:**

In einem Reaktionsgefäß mit zwei übereinander angeordneten Siebböden wird oberhalb des oberen Siebbodens Steinkohlenkoks mit einer Körnung von 0,8 - 1,1 mm mit Wasserdampf bei einer Temperatur von 700°C und einem Druck von 60 bar in einer Wirbelschicht zur Reaktion gebracht. Der Wasserdampf, dem eine geringe Menge Sauerstoffgas zugesetzt ist, durchströmt zunächst oberhalb des unteren Siebbodens eine fluidisierte Schicht von Vergasungsrückständen, deren Menge etwa einem Viertel der Kohleeinwaage entspricht. Diese Vergasungsrückstände entstammen einer durch Kaliumcarbonat katalysierten Wasserdampf-Vergasungsreaktion des genannten Kokses. Eine Elementaranalyse ergibt für die Zusammensetzung des Vergasungsrückstandes: C 17,8 Gew.-% (teilweise als elementarer Kohlenstoff, teilweise als Carbonat vorliegend), $K_2O$ 25,8 Gew.-%, $Na_2O$ 0,8 Gew.-%, $SiO_2$ 20,4 Gew.-%, $Al_2O_3$ 15,3 Gew.-%, $Fe_2O_3$ 11,1 Gew.-%, CaO 1,0 Gew.-%, MgO 0,9 Gew.-%, $P_2O_5$ 0,4 Gew.-%, $SO_3$ 1,5 Gew.-%, $TiO_2$ 0,7 Gew.-%, Cl 0,1 Gew.-%. Ferner werden pro kg Vergasungsrückstand 0,1 kg Kalk $(CaCO_3)$ zugesetzt. Die zudosierte Menge an Sauerstoff wird so eingestellt, daß durch Verbrennung von in den Vergasungsrückständen enthaltenem Restkohlenstoff in dieser unteren Wirbelschicht eine örtlich gemittelte Temperatur von 860 - 880°C eingehalten wird. Der Wasserdampf, der sich in diesem unteren Wirbelbett mit Katalysator beladen hat, setzt sich nach Durchströmen des oberen Siebbodens mit dem dort vorliegenden fluidisierten Steinkohlenkoks um. Die Reaktionsgeschwindigkeit beträgt zunächst zu Anfang des Versuches nach Einstellung der Versuchsparameter 0,12 % C/min, und steigt im Laufe einer Stunde auf den Wert 0,74 % C/min an. Nach Auskondensation des nicht umgesetzten Wasserdampfes verbleibt ein Gas der mittleren Zusammensetzung $CH_4$ 6 %, $H_2$ 62 %, $CO_2$ 29 %, CO 4 %.

Vergleichsweise wird - ohne Anwesenheit von Vergasungsrückständen auf dem unteren Siebboden desselben Reaktionsbehälters mit demselben Koks unter denselben Bedingungen eine nahezu gleichbleibende Reaktionsgeschwindigkeit von 0,11 - 0,15 % C/min gefunden. Die Produktgaszusammensetzung beträgt in diesem Fall nach Auskondensation des nicht umgesetzten Wasserdampfes $CH_4$ 7 %, $H_2$ 56 %, CO 20 %, $CO_2$ 17 %.

**Ausführungsbeispiel 2:**

In dem Reaktionsbehälter wird derselbe Steinkohlenkoks wie im Ausführungsbeispiel 1 mit Wasserdampf zur Reaktion gebracht. Die übrigen Versuchsparameter wie Kokseinwaage, Wasserdampfstrom, Druck und Temperatur der Vergasungsreaktion werden ebenfalls wie im Ausführungsbeispiel 1 gewählt. Auch der Vergasungsrückstand, der aus derselben Charge wie der im Ausführungsbeispiel 1 entstammt und der Kalk werden in derselben Menge eingesetzt. Im Gegensatz zu Ausführungsbeispiel 1 wird jedoch die untere, aus dem besagten Vergasungsrückstand bestehende Wirbelschicht auf eine örtlich gemittelte Temperatur von 890 - 900°C eingestellt. Die Reaktionsgeschwindigkeit beträgt nach Einstellung der Versuchsbedingungen 0,14 % C/min, und steigt im Laufe einer Stunde auf den Wert 1,68 % C/min an. Nach Auskondensation des nicht umgesetzten Wasserdampfes verbleibt ein Gas der mittleren Zusammensetzung $CH_4$ 6 %, $H_2$ 60 %, $CO_2$ 31 %, CO 3 %. Vergleichsweise wird - ohne Anwesenheit von Vergasungsrückständen auf dem unteren Siebboden desselben Reaktionsbehälters - mit demselben Koks unter denselben Bedingungen eine gleichbleibende Reaktionsgeschwindigkeit von 0,14 - 0,17 % C/min erzielt.

**Patentansprüche**

1. Verfahren zum Umsetzen von kohlenstoffhaltigem Rohstoff, insbesondere von Kohle, Holz oder Erdöl, zu einem brennbaren Produktgas durch eine Vergasungsreaktion mit Wasserdampf in Gegenwart eines Katalysators, der im für die Vergasungsreaktion bestimmten Wasserdampf unter Bildung einer gasförmigen homogenen Lösung gelöst ist, <u>dadurch gekennzeichnet</u>, daß zur Herstellung der gasförmigen homogenen Lösung des Katalysators in Wasserdampf die aschehaltigen Vergasungsrückstände abgetrennt, unmittelbar in eine nachgeschaltete Extraktionszone eingeführt, in dieser durch Produktgas und/oder Sauerstoffgas aufgeheizt, mit dem für die Vergasungsreaktion erforderlichen Wasserdampf unter Ausbildung einer Wirbelschicht kontaktiert und die so erhaltene gasförmige homogene Lösung unmittelbar in die Vergasungszone eingeführt wird.

2. Verfahren nach Anspruch 1, <u>dadurch gekennzeichnet</u>, daß vorerhitztes Sauerstoffgas verwendet wird.

3. Verfahren nach Anspruch 1, <u>dadurch gekennzeichnet</u>, daß die aschehaltigen Vergasungsrückstände abwechselnd mit dem für die Vergasungsreaktion bestimmten Wasserdampf und dem Sauerstoffgas in Kontakt gebracht werden.

4. Verfahren nach Anspruch 1, <u>dadurch gekennzeichnet</u>, daß den aschehaltigen Vergasungsrückständen nach dem Abtrennen kohlenstoffhaltiger Rohstoff zugesetzt wird.

5. Verfahren nach Anspruch 1, <u>dadurch gekennzeichnet</u>, daß die Vergasungsreaktion, das Abtrennen der aschehaltigen Vergasungsrückstände und das Extrahieren des Katalysators aus den aschehaltigen Vergasungsrückständen in demselben Reaktionsbehälter durchgeführt werden.

6. Verfahren nach Anspruch 1, <u>dadurch gekennzeichnet</u>, daß der Katalysator dem kohlestoffhaltigen Rohstoff als homogene gasförmige Lösung zugeführt wird.

7. Verfahren nach Anspruch 1, <u>dadurch gekennzeichnet</u>, daß als Katalysator Carbonate, Hydroxide, Oxide und Halogenide der Alkalien und/oder Oxide, Hydroxide und Halogenige von Erdalkalien, Eisen, Nickel und Kobalt verwendet werden.

8. Verfahren nach Anspruch 1, dadurch gekennzeichnet, daß den aschehaltigen Vergasungsrückständen nach dem Abtrennen ein Zusatzstoff zugesetzt wird, mit dem der Katalysator reaktiviert wird.

9. Verfahren nach Anspruch 1, dadurch gekennzeichnet, daß das Extrahieren des Katalysators aus den aschehaltigen Vergasungsrückständen in einer Wirbelschicht zugeführt wird.

**Claims**

1. Process for converting raw carbonaceous material, in particular coal, wood or petroleum, into a combustible product gas by means of a gasification reaction with steam in the presence of a catalyst, which is dissolved in the steam used for the gasification to form a gaseous homogeneous solution, characterised in that to produce the gaseous homogeneous solution of the catalyst in the steam, the ash-containing gasification residue is separated, fed directly into a downstream extraction zone, heated therein by means of product gas and/or oxygen gas, brought into contact with the steam required for the gasification reaction to form a fluidized bed, and the homogeneous gaseous solution obtained in this way is fed directly into the gasification zone.

2. Process according to claim 1, characterised in that pre-heated oxygen gas is used.

3. Process according to claim 1, characterised in that the ash-containing gasification residue is brought into contact alternately with the steam used for the gasification reaction and with the oxygen gas.

4. Process according to claim 1, characterised in that, after the separation, raw carbonaceous material is added to the ash-containing gasification residue.

5. Process according to claim 1, characterised in that the gasification reaction, the separation of the ash-containing gasification residue and the extraction of the catalyst from the ash-containing gasification residue carried out in the same reaction container.

6. Process according to claim 1, characterised in that the catalyst is added to the raw carbonaceous material as a homogeneous gaseous solution.

7. Process according to claim 1, characterised in that carbonates, hydroxides, oxides and halides of alkalis and/or oxides, hydroxides and halides of alkaline earths, iron, nickel, and cobalt are used as catalyst.

8. Process according to claim 1, characterised in that an additive, with which the catalyst is reactivated, is added to the ash-containing gasification residue after the separation.

9. Process according to claim 1, characterised in that the extraction of the catalyst from the ash-containing gasification residue is carried out in a fluidized bed.

**Revendications**

1. Procédé pour transformer de la matière première carbonacée, notamment du charbon, du bois ou du pétrole en un produit gazeux combustible par une réaction de gazéification avec de la vapeur d'eau, en présence d'un catalyseur qui est dissous, avec formation d'une solution homogène gazeuse dans la vapeur d'eau destinée à la réaction de gazéification, caractérisé en ce qu'il consiste, pour la préparation de la solution homogène gazeuse du catalyseur dans la vapeur d'eau, à séparer les résidus de gazéification contenant des cendres, à les introduire directement dans une zone d'extraction en aval, à les chauffer dans celle-ci par du produit gazeux et/ou par de l'oxygène gazeux, à les mettre en contact avec la vapeur d'eau nécessaire à la réaction de gazéification avec constitution d'un lit fluidisé et à introduire la solution homogène gazeuse ainsi obtenue directement dans la zone de gazéification.

2. Procédé suivant la revendication 1, caractérisé en ce qu'il consiste, à utiliser de l'oxygène gazeux préchauffé.

3. Procédé suivant la revendication 1, caractérisé en ce qu'il consiste, à mettre les résidus de gazéification contenant des cendres en contact alternativement avec la vapeur d'eau destinée à la réaction de gazéification, et avec l'oxygène gazeux.

4. Procédé suivant la revendication 1, caractérisé en ce qu'il consiste, à ajouter de la matière première carbonacée aux résidus de gazéification contenant des cendres après la séparation.

5. Procédé suivant la revendication 1, caractérisé en ce qu'il consiste, à effectuer la réaction de gazéification, la séparation des résidus de gazéification contenant des cendres et l'extraction du catalyseur des résidus de gazéification contenant des cendres dans le même réacteur..

6. Procédé suivant la revendication 1, caractérisé en ce qu'il consiste, à ajouter le catalyseur sous la forme d'une solution gazeuse homogène à la matière première carbonacée.

7. Procédé suivant la revendication 1, caractérisé en ce qu'il consiste, à utiliser comme catalyseur des carbonates, des hydroxydes, des oxydes et des halogénures des métaux alcalins et/ou des oxydes, des hydroxydes et des halogénures des métaux alcalino-terreux du fer, du nickel et du cobalt.

8. Procédé suivant la revendication 1,

caractérisé en ce qu'il consiste,

à ajouter un additif par lequel le catalyseur est réactivé aux résidus de gazéification contenant des cendres après la séparation.

9. Procédé suivant la revendication 1, caractérisé en ce qu'il consiste,

à envoyer le catalyseur extrait des résidus de gazéification contenant des cendres dans un lit fluidisé.

0 096 800